# EUROPEAN PATENT SPECIFICATION

(11) **EP 1 395 917 B1**
(45) Date of publication and mention of the grant of the patent: **29.12.2004**
(21) Application number: 01938287.8
(22) Date of filing: 01.06.2001
(51) Int. Cl.: G06F 17/30

(54) **METHOD AND SYSTEM FOR DELIVERING INFORMATION IN A TELECOMMUNICATION NETWORK**
VERFAHREN UND SYSTEM ZUM ABLIEFERN VON INFORMATIONEN IN EINEM TELEKOMMUNIKATIONSNETZ
PROCEDE ET SYSTEME DE TRANSMISSION D'INFORMATIONS DANS UN RESEAU DE TELECOMMUNICATIONS

(43) Date of publication of application: 10.03.2004
(73) Proprietor: SmartTrust AB, 100 74 Stockholm (SE)
(72) Inventor: LINDEN, Anders, S-120 58 Arsta (SE); KÄRKI, Liris, S-118 53 Stockholm (SE); JOHANSSON, Martin, S-114 57 Stockholm (SE)
(74) Representative: Söderman, Päivi Karin Lisbeth
(86) International application number: PCT/FI2001/000525
(87) International publication number: WO 2002/097665

(56) References cited:
- US-A- 6 018 764
- US-A- 6 049 835
- US-A- 6 076 109

## Description

### TECHNICAL FIELD

The invention is concerned with a method and system for delivering information in a telecommunication network to user terminals, especially for delivering information to mobile stations.

### TECHNICAL BACKGROUND

Internet is a worldwide network of individual computer networks. It is primarily used for electronic mail, on-line- discussing, for displaying and delivering information in form of graphics, text, video and audio clips and for secure transactions. The World Wide Web, also called just "web", is a standardized method for combining the last mentioned forms into a friendly user interface.

A web browser is a software program which is used on a personal computer to access the web and handles accessing and displaying of the information fetched. The client is an application requesting information in a user terminal, from web pages or other information sources.

A web site or web page describes an individual place on the web, comprising a collection of files located somewhere on a certain computer, which is connected to the internet. A web site may consist of one web page or many web pages, which usually also includes graphics, pictures, text, video and/or audio clips, or an archive of software that can be downloaded, stored and used on the personal computer that fetched the site.

Web pages might also have one or more links to other web pages by clicking on which other web pages can be fetched. The links can be located within the same site or other sites. The World Wide Web standards use a special text coding language, the Hyper Text Mark-up Language, HTML, with which selected elements in a text file can be turned into hot links that are easily accessible by anyone with a Web browser. A content provider is a web server that contains web applications, in most cases written in a Mark-up language, like HTML or WML.

Every web page has an exact address, or location, on the web. Such addresses are known as a Uniform Resource Locator or URL, which is used to identify a resource. Thus, a URL (Uniform Resource Locator) is the address of a file (resource) accessible on the Internet as described in RFC1738. An example of an URL is www.company.com/press.asp?pressrelease=largeorder. Reference: RFC 1738 Uniform Resource Locators (URL). The RFC 1738 describes the syntax and semantics of formalized information for location and access of resources via the Internet using Uniform Resource Locator (URL).

URLs consist of a string of subdirectories, files or executable commands, separated by slashes, which are extremely difficult to work with and which must be typed into the user's web browser exactly as they appear, including the use of upper and lower case letters, in order to go to a web site.

By clicking on hot links, one can go to a web page without having to type or copy a URL. This method, however, requires the fetching of a web page that actually contains the right link.

Web browsers also have a bookmark or hot list feature, which allows the user to capture and save the location of any web site that is visited, so that such sites can be readily reaccessed by clicking on it from the user's web browser at any time.

There are also some further known solutions for easy acces to web pages. US patent 6,049,835 utilizes a published list of preselected web sites, which are selected according to predetermined criteria, such as content, usefulness, authorship etc. Each of the selected web sites is assigned a specific four-digit jump code. A user desiring to access one of the preselected web sites first gains access to the world wide web, using a web browser, by accessing a special web site, which contains software for receiving any of the published four-digit jump codes and, based upon the stored relationship of the URLs corresponding to the input jump code, directly accesses the web site corresponding to the jump code inputted by the user.

In the Internet world, the communication channel between Content Provider and client is normally quite broad. Fixed browser clients are usually connected over a broad communication channel, whereas mobile clients normally are connected over narrow communication channels. Besides the already mentioned problems with complicated and long URL addresses on the client side, these addresses also cause problems when delivering information over narrow communication channels because of limited available bandwidth. The URL scheme is used to identify resources on the content side, but the URLs are not efficient for communicating on narrow band communication links since the URL's are normally long.

This problem is even more accentuated when web pages containing several links are delivered to user terminals connected over narrow communication channels.

### THE OBJECT OF THE INVENTION

The primary object of this information is to develop a method with which web pages with several links can be delivered to user terminals connected over narrow band channels.

A secondary object of the invention is to develop a solution with which mobile users can access hot linked web pages with decreased bandwidth.

### SUMMARY OF THE INVENTION

The method of the invention is performed in a telecommunication network, comprising a content provider that delivers information, means for converting the information from one form to another, and a client terminal to which the information is delivered. Each piece of information is located by a network address in the telecommunciation network. In the method, information is delivered to the client terminal from the content provider. The method is characterized by initiating information to be sent from the content provider to said means from a given information address. The information contains further information addresses. The form of the information address is transformed by said means to a shorter form. The information addresses and its corresponding shorter forms are mapped in a database that is connected to said means. The shorter forms of the addresses of the further information are then passed from said means to the client terminal. When the client terminal wishes to access the information in the further addresses, a request for the further information is sent from the client terminal to said means by using the delivered shorter forms for the addresses of the further information. The transformed forms are replaced with the real addresses in said means. Said means then requests for the further information by means of the real addresses by sending a message to the content provider and the content provider responds by sending the further information to the client terminal via said means.

The invention is also concerned with a system in a telecommunication network, comprising a content provider that delivers information located by means of network addresses, means for converting the information from one form to a shorter form, and a client terminal to which the information is delivered. It further comprises a database, wherein a number of information addresses are mapped to said shorter form.

The information to be sent from the content provider to said means is either initiated by a request from the client terminal to the content provider or it is initiated by a push of a web page initited by a web server application.

The advantageous embodiments of the invention are presented in the subclaims.

This invention is primarily meant for the scenario when there is a client application connected to any kind of content provider over a narrow band channel using location by means of URL addresses. The client terminal in such systems is usually a mobile phone, and the means for converting the information from one form to another is a gateway. The link between the mobile phone and the gateway is a narrow band link. The invention though, may just as well be applied to all systems, wherein there is a browser application on the client and a gateway inbetween the content provider and the client.

In said scenario, the information to be delivered is primarily a web page and the addresses of information to be delivered are URL addresses. The form of the information addresses to be transformed by the gateway are converted or compressed to a shorter form.

In practice, the client is usually first requesting for a web page. The web page contains links, i.e. requests for other URLs. A mapping of URLs to preferably a numeric ID is then made in the gateway. This numeric ID is then passed to the client. If the client would request for one of the URL's, the ID is sent to the gateway, which replaces the ID with the actual URL.

In narrow band communication channels, the compressing of information is essential to get a well working system.

In the wireless world, gateways are used to compress the amount of data between the Content Provider and the client. Gateways are frequently used in systems for compressing information over a narrow band communication link, transforming the information from one syntax to another more efficient (but normally less visual) syntax. In the invention, the means for converting the information from one form to another can be a gateway, a proxy or some other component.

Since in web applications, links are a frequently used element, the invention will drastically increase the usability of client browser applications connected to the gateway using a narrow band channel.

The solution is transparent to the content provider. The technology may be applied to existing web server content, dramatically increasing the use of the invention.

The web application developer may write an arbitrary long URL. The web application will then be easier to maintain, since the directory structure of the application may be better described, without needing to limit the length of the directory names.

### BRIEF DESCRIPTION OF DRAWINGS

Figure 1 is an overall architecture view of the system of the invention
Figure 2 is a signalling example of the method of the invention

### DETAILED DESCRIPTION

The method of the invention can be performed in a telecommunication network, comprising a content provider 1 that delivers information, a gateway 2 for converting the information from one form to another, and a mobile terminal 3 to which the information is delivered. Each piece of information is located by a network address URL in the telecommunciation network. A user agent browser 4 is run on the mobile terminal 3 for accessing web pages.

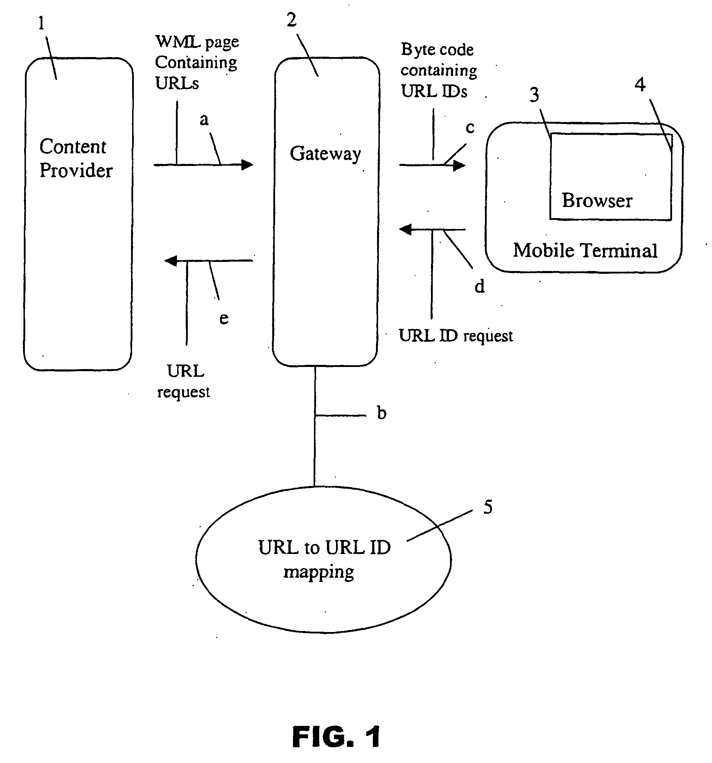

In figure 1, it is assumed that a push for a web page to be sent from the content provider has been initiated. As a response, the content provider 1 sends a WML page (Wireless Markup language page) containing URL links to the gateway 2 in step a. The gateway receives the page, compresses the page to byte code and replaces the different URLs with short IDs. The ID is much shorter than the real URL address. In step b, a mapping of URL's to preferably an ID is then made to a database 5 in the gateway. This ID is then passed to the client in step c in byte code form. When the client requests for one of the URL's, the ID corresponding to the actual URL is sent to the gateway in step d, which replaces the ID with the actual URL and sends the URL requests to the content provider in step e. As a response, the content provider then sends the content located at this URL to the client.

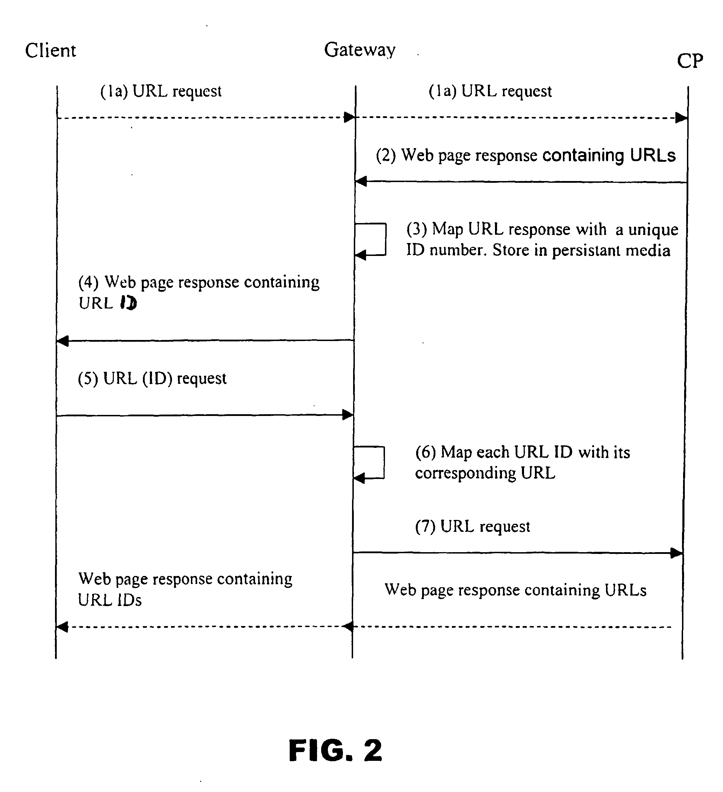

The method of the invention is described more in detail in the signalling diagram of figure 2. First the web page download from the content provider to the gateway has to be initiated. For that purpose, the client requests for a web page in step 1 a or the web server application initiates a push of a web page (not shown in the sequence diagram of figure 2). The content provider then sends a web page in step 2 to the gateway either as a response to the previous URL request of step 1a or as a push. The gateway receives the web page and transforms the page to byte code in step 3. The page may contain an arbitrary number links to other web pages. Each link consists of an URL. Links to other web pages, such as a "go href" command in WML, are replaced with IDs. No dynamic variables are replaced with an ID, but they are added to the ID. The byte code containing the IDs is sent to the client in step 4. The client executes the script. When the client clicks on a link to another web page, a short message SMS containing the ID and additional variables is sent to the gateway from the client. In step 6, the gateway searches the map to find the complete URL corresponding to the ID that came from the client. The gateway replaces the ID with the complete URL and requests for the web page from the content provider in step 7 in form of a normal URL request. The gateway searches the map to find the complete URL corresponding to the ID that came from the client. The gateway replaces the ID with the complete URL and requests for the web page in step 7 as a normal URL request. The content provider responds with a web page (continue sequence at action number 2) and sends it to the client in step 8.

## Claims

1. Method for delivering information in a telecommunication network, comprising a content provider (1) that delivers the information, means (2) for converting the information from one form to another, and a client terminal (3) to which the information is delivered, each piece of information being located by means of a network address,
**characterized by** the steps of
a) initiating information with a given information address to be sent from the content provider to said means, which information contains further information addresses,
b) transforming the form of the further information addresses by said means (2) to a shorther form,
c) storing the mapping of the information addresses and its corresponding shorter forms in a database (5) connected to said means (2),
d) passing the shorter forms of the addresses of the further information from said means (2) to the client terminal (3),
e) sending a request for some further information from the client terminal to said means (2) by using the delivered shorter forms for the addresses of the further information,
f) replacing the transformed forms with the real addresses in said means (2),
g) said means (2) requesting for the further information by means of the real addresses by sending a message to the content provider,
h) the content provider responds by sending the further information to the client terminal via said means (2).

2. Method of claim 1, **characterized in that** the information to be delivered is a web page.

3. Method of claim 1 or 2, **characterized in that** the information to be sent from the content provider to said means in step a) is initiated by a request from the client terminal to the content provider.

4. Method of claim 1 or 2, **characterized in that** the information to be sent from the content provider to said means in step a) is initiated by a push of a web page initited by a web server application.

5. Method of claim 1 or 2, **characterized in that** the addresses of information to be fetched are URL addresses.

6. System for delivering information in a telecommunication network, comprising a content provider (1) that delivers information located by means of network addresses, **characterized in that** it comprises means (2) for converting network addresses included in the information to be delivered from one form to a shorter form a database (5) wherein a number of network addresses are mapped to said shorter form, a client terminal (3) to which the information is delivered and by which information is requested by using the converted form mapped in the database, and means (2) for converting the mapped form to the network address for fetching the requested information.

7. System of claim 6, **characterized in that** the information to be fetched is a web page.

8. System of claim 7, **characterized in that** the addresses of information to be fetched are URL addresses.

9. System of any of claims 7 and 8, **characterized in that** the form to which the information addresses are mapped is shorter compared to the real information address.

10. System of any of claims 7-9, **characterized in that** the client terminal is a mobile phone.

11. System of any of claims 7-10, **characterized in that** the link between the mobile phone and said means is a narrow band link.

## Patentansprüche

1. Verfahren zur Übermittlung von Information in einem Telekommunikationsnetz, bestehend aus einem Inhalte-Anbieter (1), der die Information übermittelt, Mitteln (2) zur Umwandlung der Information von einer Form in eine andere und einem Client-Terminal (3), an das die Information übermittelt wird, wobei jede einzelne Information mittels einer Netzadresse lokalisiert wird,
**gekennzeichnet durch** folgende Schritte
a) Initiieren, dass Information mit einer gegebenen Informationsadresse vom Inhalte-Anbieter zu besagten Mitteln übermittelt wird, welche Information weitere Informationsadressen enthält,
b) Transformieren der Form der weiteren Informationsadressen **durch** besagte Mittel (2) in eine kürzere Form,
c) Speicherung des Mapping der Informationsadressen samt ihren kürzeren Formen in einer Datenbasis (5), die mit besagten Mitteln (2) verbunden ist,
d) Leiten der kürzeren Formen der Adressen der weiteren Information von besagten Mitteln (2) zum Client-Terminal (3),
e) Senden einer Anfrage für weitere Information vom Client-Terminal zu besagten Mitteln (2) bei Benutzung der gegebenen kürzeren Formen für die Adressen der weiteren Information,
f) Ersetzen der transformierten Formen **durch** die realen Adressen in besagten Mitteln (2),
g) welche Mittel (2) die weitere Information anhand der realen Adressen anfordern, indem sie eine Nachricht an den Inhalte-Anbieter versenden,
h) der Inhalte-Anbieter antwortet, indem er die weitere Information über besagte Mittel (2) zum Client-Terminal versendet.

2. Verfahren nach Patentanspruch 1, **dadurch gekennzeichnet, dass** es sich bei der zu übermittelnden Information um eine Webseite handelt.

3. Verfahren nach Patentanspruch 1 oder 2, **dadurch gekennzeichnet, dass** die Versendung der Information in Schritt a) vom Inhalte-Anbieter zu besagten Mitteln durch eine Anfrage vom Client-Terminal an den Inhalte-Anbieter initiiert wird.

4. Verfahren nach Patentanspruch 1 oder 2, **dadurch gekennzeichnet, dass** die Versendung der Information in Schritt a) vom Inhalte-Anbieter zu besagten Mitteln durch einen Push einer Webseite initialisiert wird, der durch eine Webserverapplikation initiiert wird.

5. Verfahren nach Patentanspruch 1 oder 2, **dadurch gekennzeichnet, dass** die Adressen der abzurufenden Information URL-Adressen sind.

6. Verfahren zur Übermittlung von Information in einem Telekommunikationsnetz, bestehend aus einem Inhalte-Anbieter (1), der anhand von Netzadressen lokalisierte Informationen übermittelt, **dadurch gekennzeichnet, dass** es aus Mitteln (2) besteht zur Umwandlung der in der zu übermittelnden Information enthaltenen Netzadressen von einer Form in eine kürzere Form, einer Datenbasis (5), wo eine Anzahl Netzadressen in die kürzere Form gemappt sind, einem Client-Terminal (3), an das die Information übermittelt wird und mit Hilfe dessen die Information anhand der in der Datenbasis gemappten umgewandelten Form angefordert wird, sowie Mitteln (2) zur Umwandlung der gemappten Form in die Netzadresse für den Abruf der angeforderten Information.

7. Verfahren nach Patentanspruch 6, **dadurch gekennzeichnet, dass** es sich bei der abzurufenden Information um eine Webseite handelt.

8. Verfahren nach Patentanspruch 7, **dadurch gekennzeichnet, dass** es sich bei den Adressen der abzurufenden Information um URL-Adressen handelt.

9. Verfahren nach einem der Patentansprüche 7 und 8, **dadurch gekennzeichnet, dass** die Form, in der die Informationsadressen gemappt werden, im Vergleich zur realen Informationsadresse kürzer ist.

10. Verfahren nach einem der Patentansprüche 7 bis 9, **dadurch gekennzeichnet, dass** es sich beim Client-Terminal um ein Mobiltelefon handelt.

11. Verfahren nach einem der Patentansprüche 7 bis 10, **dadurch gekennzeichnet, dass** die Verbindung zwischen Mobiltelefon und besagten Mitteln ein Schmalbanddatenkanal ist.

## Revendications

1. Procédé de transmission d'information dans un réseau de télécommunication, comprenant un fournisseur d'accès (1) qui transmet l'information, un moyen (2) pour convertir l'information d'une forme en une autre, et un terminal client (3) auquel l'information est transmise, chaque pièce d'information étant localisée au moyen d'une adresse de réseau,
**caractérisé par** les étapes consistant à
a) initialiser l'information avec une adresse d'information donnée devant être envoyée du fournisseur d'accès audit moyen, laquelle information contient des adresses d'information supplémentaire,
b) transformer la forme des adresses d'information supplémentaire par ledit moyen (2) à une forme plus courte,
c) mémoriser les adresses d'information et les formes correspondantes plus courtes de celles-ci dans une base de données (5) raccordée audit moyen (2),
d) faire passer les formes plus courtes des adresses d'information supplémentaire dudit moyen (2) au terminal client (3),
e) envoyer une requête pour certaine information supplémentaire du terminal client audit moyen (2) en utilisant les formes transmises plus courtes pour les adresses d'information supplémentaire,
f) remplacer les formes transformées avec les adresses réelles dans ledit moyen (2),
g) ledit moyen (2) demandant l'information supplémentaire au moyen des adresses réelles en envoyant un message au fournisseur d'accès,
h) le fournisseur d'accès répond en envoyant l'information supplémentaire au terminal client via ledit moyen (2).

2. Procédé selon la revendication 1,**caractérisé en ce que** l'information devant être transmise est une page web.

3. Procédé selon la revendication 1 ou 2, **caractérisé en ce que** l'information devant être envoyée du fournisseur d'accès audit moyen dans l'étape a) est initialisée par une requête du terminal client au fournisseur d'accès.

4. Procédé selon la revendication 1 ou 2, **caractérisé en ce que** l'information devant être envoyée du fournisseur d'accès audit moyen dans l'étape a) est initialisée par un appui d'une page web initialisée par une application de serveur.

5. Procédé selon la revendication 1 ou 2, **caractérisé en ce que** les adresses d'information devant être cherchées sont des adresses URL.

6. Système de transmission d'information dans un réseau de télécommunication, comprenant un fournisseur d'accès (1) qui transmet l'informations localisée au moyen d'adresses de réseau, **caractérisé en ce qu'**il comprend un moyen (2) pour convertir des adresses de réseau incluses dans l'information devant être trasnmise d'une forme en une forme plus courte, une base de données (5), dans laquelle de nombreuses adresses de réseau sont mémorisées à ladite forme plus courte, un terminal client (3), auquel l'information est transmise et par lequel l'information est demandée en utilisant la forme convertie mémorisée dans la base de données, et un moyen (2) pour convertir la forme mémorisée en adresse de réseau pour chercher l'information demandée.

7. Système selon la revendication 6, **caractérisé en ce que** l'information devant être cherchée est une page web.

8. Système selon la revendication 7, **caractérisé en ce que** les adresses d'information devant être cherchées sont des adresses URL.

9. Système selon l'une des revendications 7 et 8, **caractérisé en ce que** la forme dans laquelle les adresses d'information sont mémorisées est plus courte comparée à l'adresse d'information réelle.

10. Système selon l'une des revendications 7 à 9, **caractérisé en ce que** le terminal client est un téléphone portable.

11. Système selon l'une des revendications 7 à 10, **caractérisé en ce que** la liaison entre le téléphone portable et ledit moyen est une liaison à bande étroite.
